# EUROPÄISCHE PATENTANMELDUNG

(11) **EP 3 851 181 A1**
(43) Veröffentlichungstag der Anmeldung: **21.07.2021**
(21) Anmeldenummer: 20020023.6
(22) Anmeldetag: 17.01.2020
(51) Int. Cl.: B01D 61/00, G05B 13/04

(54) **VERFAHREN ZUM ÜBERWACHEN EINER MEMBRANTECHNISCHEN VORRICHTUNG**

(71) Anmelder: Linde GmbH, 82049 Pullach (DE)
(72) Erfinder: Voss, Christian, 82538 Geretsried (DE); Thomas, Ingo, 82041 Oberhaching (DE); Schiffmann, Patrick, 80331 München (DE); Johannink, Matthias, 81477 München (DE)
(74) Vertreter: Lu, Jing

(57) **Zusammenfassung**

Die vorliegende Erfindung betrifft ein Verfahren zum Überwachen einer membrantechnischen Vorrichtung (200), wobei während des Betriebs der membrantechnischen Vorrichtung (200) Messwerte erfasst werden (201), wobei in Abhängigkeit von den erfassten Messwerten ein aktueller Zustand der membrantechnischen Vorrichtung (200) bestimmt wird (211), wobei in Abhängigkeit von den erfassten Messwerten mittels eines computerimplementierten Modells (212) der membrantechnischen Vorrichtung ein modellbestimmter Zustand der membrantechnischen Vorrichtung (200) bestimmt wird, wobei in Abhängigkeit von dem modellbestimmten Zustand und von dem aktuellen Zustand eine Überwachung wenigstens einer Komponente der membrantechnischen Vorrichtung (200) durchgeführt wird (213).

## Beschreibung

Die Erfindung betrifft ein Verfahren zum Überwachen einer membrantechnischen Vorrichtung sowie eine Recheneinheit und ein Computerprogramm zu dessen Durchführung.

### Stand der Technik

Als membrantechnische Vorrichtungen seien im vorliegenden Zusammenhang Apparate oder Anlagen der Membrantechnik verstanden, welche zur Durchführung eines membrantechnischen Prozesses bzw. eines Membrantrennverfahrens vorgesehen sind. Membrantrennverfahren zur Bearbeitung von Gasgemischen sind bekannt und beispielsweise bei Stookey, D.J., Membranes: Gas-Separation Applications, Ullmann's Encyclopedia of Industrial Chemistry, Wiley-VCH, Onlineveröffentlichung 2005, DOI 10.1002/14356007.a16_187.pub2, beschrieben. Bezüglich der hierbei verwendeten Membranmaterialien und der mittels Membrantrennverfahren trennbaren Gasgemische wird auf die Fachliteratur ausdrücklich Bezug genommen. Die vorliegende Erfindung kann grundsätzlich im Zusammenhang mit allen solchen Membranmaterialien und Membrantrennverfahren zum Einsatz kommen.

Membrantrennverfahren beruhen auf der unterschiedlichen Permeabilität und ggf. Affinität eines Membranmaterials für unterschiedliche Komponenten eines Gasgemischs. In einem Membrantrennverfahren wird das Gasgemisch dabei auf einer ersten Seite einer entsprechenden Membran (Retentatseite) bereitgestellt und es wird ein Druckgefälle über die Membran erzeugt. Komponenten, für die die Membran eine höhere Permeabilität aufweist, treten bevorzugt durch die Membran und können auf der zweiten Seite (Permeatseite), ggf. unter Einsatz eines Spülgases, abgeführt werden. Komponenten, für die die Membran eine geringere Permeabilität aufweist, verbleiben dagegen bevorzugt auf der Retentatseite und können hier abgeführt werden.

Im vorliegenden Zusammenhang wird ein bereitgestelltes Gas oder Gasgemisch mit dem Begriff "Feed" bezeichnet. Für ein auf der Retentatseite abgeführtes Gas oder Gasgemisch wird nachfolgend der Begriff "Retentat", für ein auf der Permeatseite abgeführtes Gas oder Gasgemisch der Begriff "Permeat" verwendet.

In entsprechenden Membrantrennverfahren kommen, wie in der zitierten Literatur ebenfalls beschrieben, typischerweise Membrankartuschen zum Einsatz, in denen beispielsweise senkrecht zur Längsachse angeordnete Membranstapel oder spiralig aufgewickelte Membranen ausgebildet sind, um die Kontaktfläche mit der Membran zu vergrößern. Auch aus entsprechenden Materialien gebildete Hohlfaserbündel können zum Einsatz kommen. Permeatseitig kann ein Spülgas geführt werden. Eine oder mehrere Membrankartuschen umfassen typischerweise ein Modul (in einem Druckgehäuse) und können zu mehreren in Baugruppen (engl. Banks oder Skids) zusammengefasst werden.

Bei den erläuterten Membrankartuschen handelt es sich um komplex aufgebaute und zugleich nicht beliebig robuste Komponenten. Um eine Beschädigung der Membrantrenneinheiten zu verhindern, müssen diese stets innerhalb der Auslegungsgrenzen bzw. unter den spezifizierten Betriebsbedingungen, beispielsweise bezüglich des verwendeten Druckgefälles über die Membran hinweg, betrieben werden, um Ausfälle und Beschädigungen zu vermeiden.

### Offenbarung der Erfindung

Vor diesem Hintergrund werden ein Verfahren zum Überwachen einer membrantechnischen Vorrichtung sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Die membrantechnische Vorrichtung umfasst insbesondere eine Vielzahl verschiedener Komponenten, wobei diese einzelnen Komponenten jeweils als Membran oder ferner beispielsweise auch als Kompressor, Pumpe usw. ausgebildet sein können. Zweckmäßigerweise umfasst die Vorrichtung eine Vielzahl von Membranen. Die membrantechnische Vorrichtung kann insbesondere als eine Membrankartusche ausgebildet sein oder auch beispielsweise auch modular aus einer Vielzahl einzelner parallel und/oder seriell zusammengesetzter Membrankartuschen aufgebaut sein. Beispielsweise können auch derartige Membrankartuschen im vorliegenden Zusammenhang als Komponenten der membrantechnischen Vorrichtung angesehen werden. Das vorliegende Verfahren stellt eine Möglichkeit bereit, um einzelne derartige Komponenten individuell zu überwachen.

Im Rahmen des vorliegenden Verfahrens werden während des Betriebs der membrantechnischen Vorrichtung Messwerte erfasst. Beispielsweise kann es sich bei diesen Messwerten um physikalische bzw. thermodynamische Werte wie Durchfluss, Druck, Temperatur, Stoffkonzentrationen usw. handeln, welche zweckmäßigerweise in Feed, Retentat und/oder Permeat gemessen werden.

In Abhängigkeit von den erfassten Messwerten wird ein aktueller Zustand der membrantechnischen Vorrichtung bestimmt. Als dieser aktuelle Zustand der Vorrichtung sei insbesondere zu verstehen, wie die Vorrichtung betrieben wird und insbesondere wie sich die erfassten Messwerte im Vergleich zu vorgegebenen Soll- bzw. Schwellwerten verhalten. Beispielsweise kann der aktuelle Zustand als fehlerfrei beschrieben werden, wenn sich die einzelnen Messwerte jeweils in einem durch Schwellwerte vorgegebenen zulässigen Bereich bewegen. Liegen einzelne oder alle Messwerte außerhalb des jeweiligen zulässigen Bereichs, ist der aktuelle Zustand insbesondere ein fehlerbehafteter Zustand, welcher auf einen Fehler der membrantechnischen Vorrichtung hindeutet, beispielsweise auf Verschleiß oder Defekt.

Durch die Messwerte wird insbesondere auf den aktuellen Zustand der gesamten membrantechnischen Vorrichtung rückgeschlossen. Um nun auch den Zustand einzelner Komponenten zu bewerten, wird im Rahmen des vorliegenden Verfahrens ein computerimplementiertes Model der membrantechnischen Vorrichtung verwendet.

In Abhängigkeit von den erfassten Messwerten wird mittels des computerimplementierten Modells der membrantechnischen Vorrichtung ein modellbestimmter Zustand der membrantechnischen Vorrichtung bestimmt. Mit Hilfe des computerimplementierten Modells wird der modellbestimmte Zustand aus den erfassten Messwerten bzw. aus dem aktuellen Zustand berechnet. Beispielsweise können die erfassten Messwerte dabei direkt als Eingangsgrößen für das computerimplementierte Modell verwendet werden. Es ist jedoch auch denkbar, die erfassten Messwerte zunächst aufzubereiten. Besonders zweckmäßig kann der bestimmte aktuelle Zustand als Eingangsgröße für das computerimplementierte Modell verwendet werden.

In Abhängigkeit von dem modellbestimmten Zustand und von dem aktuellen Zustand wird eine Überwachung wenigstens einer Komponente der membrantechnischen Vorrichtung durchgeführt. Insbesondere wird durch das computerimplementierte Modell nicht nur der Zustand der gesamten membrantechnischen Vorrichtung bestimmt, sondern besonders zweckmäßig der Zustand einzelner Komponenten, welche messtechnisch nicht erschlossen sind. Auf diese Weise können die Messwerte bzw. der daraus ermittelte aktuelle (globale) Zustand mit lokalen Zuständen "angereichert" werden.

Besonders zweckmäßig berücksichtigt das computerimplementierte Modell, wie sich das Verhalten bzw. die Zustände einzelner Komponenten auf die messbaren Größen in der Vorrichtung, also auf die Messwerte auswirken. Das computerimplementierte Modell erlaubt es somit, aus den aktuell erfassten Messwerten auf das Verhalten einzelner Komponenten und ferner deren modellbestimmte Zustände rückzuschließen. Im Rahmen des vorliegenden Verfahrens kann somit auf die lokalen Zustände von Komponenten geschlossen werden, so dass eine Überwachung dieser entsprechenden Komponenten ermöglicht wird. Zu diesem Zweck werden der aktuelle und der modellbestimmte Zustand zweckmäßigerweise ausgewertet, beispielsweise mittels statistischer Methoden. Ferner werden der aktuelle und modellbestimmte Zustand sowie Ergebnisse derartiger Auswertungen zweckmäßigerweise archiviert, um für zukünftige Überwachungen zur Verfügung zu stehen.

Herkömmlicherweise werden membrantechnische Vorrichtungen oftmals überwacht, indem aus Messwerten wie Durchfluss, Druck, Temperatur oder Stoffkonzentrationen in Feed, Retentat und Permeat eine mittlere, durchschnittliche Leistung der gesamten membrantechnischen Vorrichtung bestimmt wird. Dabei kann zumeist nur eine über alle Membrankartuschen bzw. alle Komponenten gemittelte Leistung bestimmt und überwacht werden. Insbesondere ist es auf diese Weise nicht ohne weiteres möglich, Zustände einzelner Membrankartuschen bzw. einzelner Komponenten individuell zu bestimmen und zu überwachen.

Das vorliegende Verfahren ermöglicht es, einzelne Membrankartuschen bzw. einzelne Komponenten der membrantechnischen Vorrichtung individuell zu überwachen, wodurch der Betrieb der membrantechnischen Vorrichtung erheblich verbessert werden kann. Beispielsweise wird es ermöglicht, frühzeitig Verschleiß oder einen bevorstehenden Defekt einzelner Komponenten zu erkennen und dem entgegenwirken zu können. Insbesondere kann somit ein optimaler Zeitpunkt erkannt werden, wann einzelne Komponenten gewartet, repariert oder bei Bedarf ausgetauscht werden sollen. Es ist somit nicht notwendig, Wartungen oder Austausch von Komponenten in regelmäßigen vorgegebenen Intervallen durchzuführen. Wartungsintervalle können vergrößert und individuell je nach Bedarf festgesetzt werden. Aufwand und Kosten für Wartung, Reparatur und den gesamten Betrieb der Vorrichtung können reduziert werden. Insbesondere können somit Kosten und Aufwand für den Betrieb der membrantechnischen Vorrichtung verringert werden.

Insbesondere kann im Rahmen des vorliegenden Verfahrens eine Kausalität zwischen den Messwerten bzw. dem daraus ableitbaren Zustand der gesamten Vorrichtung und Zuständen bzw. Zustandsänderungen einzelner Komponenten erkannt werden. Beispielsweise kann sich eine deutliche Zustandsänderung einer einzelnen Komponente, z.B. ein starker Verschleiß einer speziellen Membran, gleichermaßen oder ähnlich auf die Messwerte und den Zustand der gesamten Vorrichtung auswirken wie kleine Veränderungen mehrerer Komponenten, z.B. ein geringer Verschleiß mehrerer Membranen. Durch das vorliegende Verfahren, insbesondere durch das verwendete Modell, wird es insbesondere ermöglicht, zwischen derartigen Zustandsänderungen einzelner Komponenten zu unterscheiden.

Ferner können im Rahmen des vorliegenden Verfahrens insbesondere nichthomogene Belastungen einzelner Komponenten aufgelöst werden. Beispielsweise können ein hoher Druck von CO₂ Partikeln auf eine erste Membran in einer Serie von Membranen und ein hoher Kohlenwasserstoff-Druck auf eine letzte Membran der Serie zu einer nicht-homogenen, unterschiedlichen Alterung dieser verschiedenen Membranen führen. Das Modell ermöglicht es zweckmäßigerweise, zwischen verschiedenen, individuellen Zustandsänderungen einzelner Komponenten zu unterscheiden.

Zweckmäßigerweise können im Rahmen des vorliegenden Verfahrens spezielle lokale Phänomene in einzelnen Komponenten erkannt werden, welche für den Betrieb der gesamten Vorrichtung von spezifischer Bedeutung sein können. Das Modell ermöglicht es insbesondere, aus den erfassten Messwerten auf derartige lokale Phänomene rückzuschließen.

Das computerimplementierte Modell kann besonders zweckmäßig die membrantechnische Vorrichtung und deren Betrieb theoretisch abbilden und simulieren. Insbesondere stellt das computerimplementierte Modell einen sog. digitalen Zwilling der membrantechnischen Vorrichtung dar. Zweckmäßigerweise bildet das computerimplementierte Modell einzelne Komponenten, insbesondere alle Komponenten der membrantechnischen Vorrichtung theoretisch ab. Beispielsweise kann das computerimplementierte Modell ein dynamisches Modell sein, insbesondere ein thermo- und hydrodynamisches Modell, oder beispielsweise auch ein lineares, datengetriebenes Modell basierend auf Betriebsdaten. Ferner ist insbesondere auch eine Kombination aus einem dynamischen und einem datengetriebenen Modell denkbar. Insbesondere kann durch das computerimplementierte Modell durch theoretische thermodynamische Betrachtung und/oder Auswertung von Betriebsdaten, z.B. den Messwerten, der Betrieb der membrantechnischen Vorrichtung simuliert und nachgebildet werden und ferner mit Hilfe statistischer Methoden ein modellbestimmter Betrieb extrapoliert werden.

Vorteilhafterweise umfasst der modellbestimmte Zustand wenigstens einen lokalen Zustand einer Komponente. Mit Hilfe des computerimplementierten Modells können besonders zweckmäßig die lokalen Zustände einzelner Komponenten und deren Einflüsse auf den Gesamtzustand der gesamten Vorrichtung berücksichtigt werden. Das Modell kann dabei z.B. basierend auf theoretischen Zusammenhängen und/oder ausgewerteten Betriebsdaten berücksichtigen, wie sich die Zustände einzelner Komponenten auf die erfassbaren Messwerte auswirken. Insbesondere bringt das Modell somit allgemeine Messwerte mit speziellen lokalen Zuständen von Komponenten in Verbindung. Somit kann zweckmäßigerweise ohne zusätzlichen Messsaufwand dennoch eine individuelle Überwachung einzelner Komponenten ermöglicht werden.

Vorzugsweise wird in Abhängigkeit von dem modellbestimmten Zustand und von dem aktuellen Zustand überwacht, ob ein Verschleiß der wenigstens einen Komponente vorliegt. Insbesondere wird überwacht, ob eine Verschlechterung oder Alterung bzw. Alterungseffekte der wenigstens einen Komponente vorliegen. Zweckmäßigerweise kann in Abhängigkeit von erkanntem Verschleiß ferner überwacht werden, ob ein Defekt der wenigstens einen Komponente bevorstehen könnte.

Bevorzugt wird die Überwachung der wenigstens einen Komponente der membrantechnischen Vorrichtung in Abhängigkeit von einem Vergleich des modellbestimmten Zustands mit dem aktuellen Zustand durchgeführt. Eine Abweichung des modellbestimmten Zustands von dem aktuellen Zustand deutet insbesondere auf eine Veränderung in der membrantechnischen Vorrichtung hin, insbesondere auf einen zunehmenden Verschleiß einer oder mehrere Komponenten. Das Modell lässt in diesem Fall insbesondere Rückschlüsse darauf zu, welche der Komponenten jeweils einen Verschleiß aufweisen, so dass sich der modellbestimmte Zustand von dem aktuellen unterscheidet.

Gemäß einer besonders bevorzugten Ausführungsform wird eine zusätzliche Evaluation durchgeführt, wenn der modellbestimmte Zustand und der aktuelle Zustand um mehr als einen vorbestimmten Schwellwert voneinander abweichen. Bei einer derartigen Abweichung des modellbestimmten und aktuellen Zustands in einer vorbestimmten Weise wird insbesondere auf einen möglichen Verschleiß oder auf einen bevorstehenden Defekt einer Komponente der membrantechnischen Vorrichtung rückgeschlossen. Im Zuge der zusätzlichen Evaluation wird insbesondere bewertet, ob tatsächlich ein Verschleiß einer Komponente vorliegt und, wenn dies der Fall ist, welche Komponente welche Art von Verschleiß aufweist. Insbesondere können im Zuge der zusätzlichen Evaluation einzelne Komponenten systematisch auf Verschleiß hin untersucht werden. Beispielsweise können zu diesem Zweck zusätzliche statistische Auswertungen des modellbestimmten und aktuellen Zustands durchgeführt werden.

Besonders bevorzugt werden im Zuge der zusätzlichen Evaluation mittels des computerimplementierten Modells verschiedene Szenarien simuliert, in welchen jeweils verschiedene Komponenten der membrantechnischen Vorrichtung jeweils Verschleiß aufweisen. Insbesondere werden mit Hilfe des computerimplementierten Modells systematisch verschiedene Testszenarien nachgebildet, wobei unterschiedliche Verschleißerscheinungen einzelner Komponenten simuliert werden. Zweckmäßigerweise wird dabei untersucht, wie sich derartige Verschleißerscheinung jeweils auf die Messwerte und den Zustand der Vorrichtung auswirken würden. Insbesondere wird somit gezielt danach gesucht, welcher Verschleiß in der Vorrichtung tatsächlich vorliegt. Beispielsweise können Szenarien, in welchen jeweils eine spezielle Komponente jeweils deutlichen Verschleiß aufweist, mit Szenarien verglichen werden, in welchen jeweils mehrere Komponenten jeweils geringe Verschleißerscheinungen zeigen. Beispielsweise können ein erstes Szenario, in welchem ein mechanisches Versagen vieler Membranfasern in einer einzelnen Kartusche vorliegt, ein zweites Szenario, in welchem ein mechanisches Versagen weniger Membranfasern in vielen Kartuschen vorliegt, und ferner insbesondere ein drittes Szenario, in welchem eine Veränderung der Eigenschaften des Membranmaterials in allen Kartuschen vorliegt, z.B. durch Plastifizierung, miteinander verglichen werden.

Alternativ oder zusätzlich werden im Zuge der zusätzlichen Evaluation zusätzliche Messwerte während des Betriebs der membrantechnischen Vorrichtung bestimmt. Insbesondere kann ein gezieltes Test- bzw. Messprotokoll erstellt werden, nach welchem in der Vorrichtung entsprechende zusätzliche Messungen durchgeführt werden. Insbesondere können somit systematisch Messungen durchgeführt werden, um die Vorrichtung auf Verschleiß einzelner Komponenten hin gezielt zu untersuchen. Beispielsweise können mittels der bereits vorhandenen Sensoren zusätzliche Messwerte erfasst werden oder es können zweckmäßigerweise zusätzliche Sensoren in der Vorrichtung vorgesehen werden, beispielsweise um lokale Messungen an Komponenten durchzuführen, welche vermutlich Verschleißerscheinungen aufweisen. Die entsprechenden zusätzlichen Messungen können beispielsweise automatisch durchgeführt werden oder es kann auch einem Betreiber oder Bedienpersonal der Vorrichtung vorgeschlagen werden, die jeweiligen Messungen bzw. Messprotokolle durchzuführen.

Vorteilhafterweise wird in Abhängigkeit von der Überwachung der wenigstens einen Komponente eine Optimierung des Betriebs der membrantechnischen Vorrichtung durchgeführt. Insbesondere können im Zuge dieser Optimierung Prozess- bzw. Betriebsparameter sowie ferner insbesondere ein Anlagenfahrplan angepasst und optimiert werden, beispielsweise so dass die Vorrichtung effizienter und ökonomischer betrieben werden kann. Beispielsweise kann zu diesem Zweck ein optimierter Betrieb der Vorrichtung mit Hilfe des computerimplementierten Modells simuliert werden, um optimierte Prozess- bzw. Betriebsparameter bzw. einen optimierten Anlagenfahrplan für den tatsächlichen Betrieb zu bestimmen. Die entsprechend bestimmten optimierten Prozess-/Betriebsparameter bzw. Anlagenfahrpläne können insbesondere einem Bedienpersonal oder dem Betreiber der Vorrichtung vorgeschlagen werden.

Vorzugsweise wird in Abhängigkeit von der Überwachung der wenigstens einen Komponente bewertet, ob ein Austausch und/oder eine Modifikation der wenigstens einen Komponente durchgeführt werden soll. Wird im Zuge der Überwachung Verschleiß oder gar ein bevorstehenden Defekt einer Komponenten erkannt, kann insbesondere ferner bestimmt werden, ob bzw. wann die entsprechenden Komponenten gewartet, repariert oder ausgetauscht werden sollen. Ferner kann insbesondere, auch wenn kein Verschleiß oder kein bevorstehender Defekt erkannt wird, im Zuge der Überwachung untersucht werden, ob bzw. wie einzelne Komponenten modifiziert werden können, um einen verbesserten, optimierten Betrieb der membrantechnischen Vorrichtung zu ermöglichen. Entsprechende Ergebnisse dieser Bewertungen können zweckmäßigerweise einem Bedienpersonal oder Betreiber der Vorrichtung vorgeschlagen werden.

Bevorzugt wird in Abhängigkeit von der Überwachung der wenigstens einen Komponente eine verbleibende Lebensdauer und/oder ein Lebensdauerverbrauch der wenigstens einen Komponente bestimmt. Zweckmäßigerweise kann somit eine Überwachung der Lebensdauer (engl. "health monitoring") einzelner Komponenten und ferner insbesondere der gesamten membrantechnischen Vorrichtung durchgeführt werden. Insbesondere kann in Abhängigkeit von der bestimmten verbleibenden Lebensdauer ein optimaler Zeitpunkt bestimmt werden, um die jeweiligen Komponenten zu warten, zu reparieren oder auszutauschen.

Eine erfindungsgemäße Recheneinheit ist, insbesondere programmtechnisch, dazu eingerichtet, ein erfindungsgemäßes Verfahren durchzuführen.

Auch die Implementierung der Erfindung in Form von Software ist vorteilhaft, da dies besonders geringe Kosten ermöglicht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere magnetische, elektrische und optische Datenträger, wie Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch eine membrantechnische Vorrichtung, welche im Zuge einer bevorzugten Ausführungsform eines erfindungsgemäßen Verfahrens überwacht werden kann.
- Figur 2: zeigt schematisch membrantechnische Vorrichtungen, welche jeweils im Zuge einer bevorzugten Ausführungsform eines erfindungsgemäßen Verfahrens überwacht werden können.
- Figur 3: zeigt schematisch eine bevorzugte Ausführungsform eines erfindungsgemäßen Verfahrens als ein Blockdiagramm.

### Detaillierte Beschreibung der Zeichnung

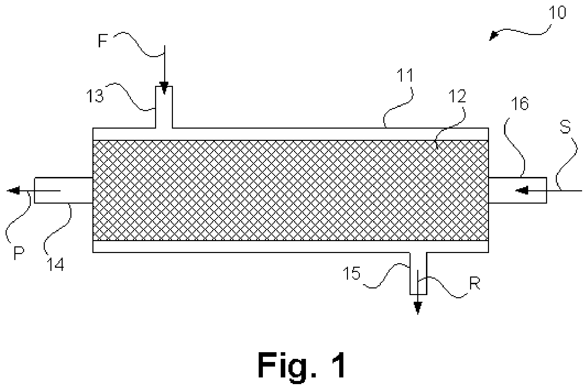

In Figur 1 ist eine als Membrankartusche ausgebildete membrantechnische Vorrichtung schematisch dargestellt und mit 10 bezeichnet.

Die Membrankartusche 10 umfasst einen Druckbehälter 11, der einen druckbeaufschlagbaren Innenraum einschließt. In dem Innenraum und damit innerhalb des Druckbehälters 11 ist eine Membrananordnung 12 bereitgestellt, die eine oder mehrere Membranen aufweist.

Zur Beaufschlagung der Membrankartusche 10 mit einem Einsatzgasgemisch (Feed) F ist ein Eintrittsstutzen 13 für das entsprechende Einsatzgasgemisch F vorgesehen. Ferner weist die Membrankartusche 10 einen Austrittsstutzen 14 für ein Permeat P sowie einen Austrittsstutzen 15 für ein Retentat R auf. In Figur 1 ist zusätzlich ein Eintrittsstutzen 16 für ein Spülgas S veranschaulicht, der jedoch nicht zwingend vorhanden sein muss.

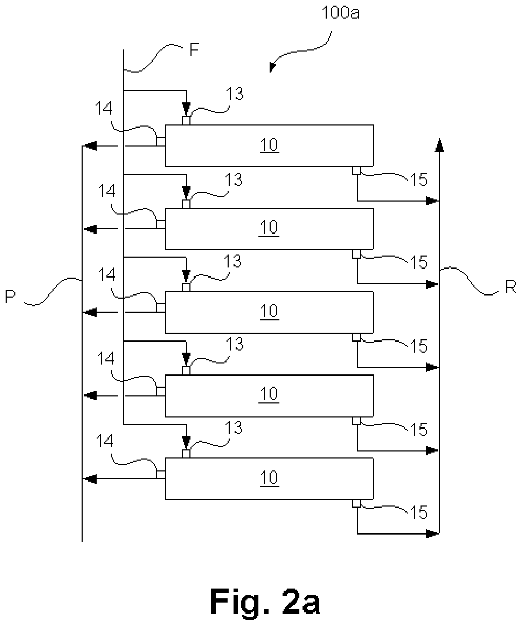

In Figur 2a ist eine membrantechnische Vorrichtung 100a schematisch dargestellt, die modular aus mehreren, hier identisch aufgebauten und bereits zu Figur 1 erläuterten Membrankartuschen 10 zusammengesetzt ist. Die einzelnen Membrankartuschen 10 sind im gezeigten Beispiel parallel zusammengesetzt, wobei ein Einsatzgasstrom F auf die Membrankartuschen 10 verteilt und über die jeweiligen Eintrittsstutzen 13 in die Membrankartuschen 10 eingespeist wird. Entsprechend wird über die jeweiligen Austrittsstutzen 14 jeweils ein Permeatstrom aus den Membrankartuschen 10 entnommen und zu einem Permeatsammelstrom P vereinigt. Entsprechendes gilt für einen Retentatsammelstrom R, der aus Retentat gebildet wird, das über die Entnahmestutzen 15 der einzelnen Membrankartuschen 10 entnommen wird.

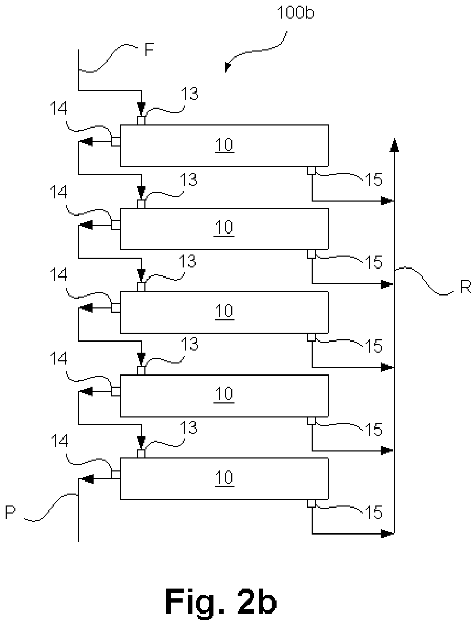

Figur 2b zeigt schematisch eine membrantechnische Vorrichtung 100b aus einer Vielzahl seriell zusammengesetzter Membrankartuschen 10. Einer ersten Membrankartuschen 10 der Serie wird über deren Eintrittsstutzen 13 das Einsatzgasgemisch (Feed) F zugeführt. Den weiteren Membrankartuschen 10 wird jeweils das dem Austrittsstutzen 14 der jeweils vorherigen Membrankartusche 10 entnommene Permeat der Serie zugeführt.

Die in Figur 1 gezeigte als einzelne Membrankartusche 10 ausgebildete membrantechnische Vorrichtung sowie die in den Figuren 2a und 2b gezeigten modular aus einer Vielzahl von Membrankartuschen 10 zusammengesetzten membrantechnischen Vorrichtungen 100a bzw. 100b können jeweils im Rahmen einer bevorzugten Ausführungsform eines erfindungsgemäßen Verfahrens überwacht werden.

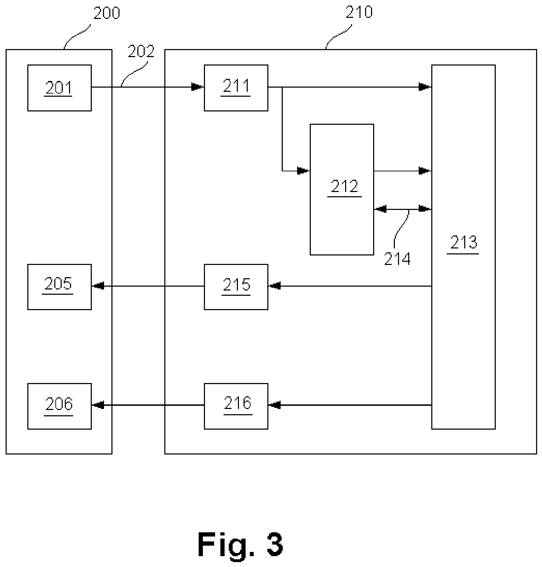

Derartige membrantechnische Vorrichtungen 10, 100a, 100b weisen jeweils eine Vielzahl verschiedener Komponenten auf, beispielsweise eine Vielzahl einzelner Membranen. Beispielsweise können auch einzelne Membrankartuschen im vorliegenden Zusammenhang als derartige Komponenten angesehen werden. Das vorliegende Verfahren stellt eine Möglichkeit bereit, um einzelne derartige Komponenten einer membrantechnischen Vorrichtung individuell zu überwachen, wie nachfolgend anhand von Figur 3 erläutert werden soll, in welcher eine bevorzugte Ausführungsform eines erfindungsgemäßen Verfahrens als ein Blockdiagramm dargestellt ist.

Block 200 stellt dabei die zu überwachende membrantechnische Vorrichtung dar. Eine Recheneinheit 210 ist, insbesondere programmtechnisch, dazu eingerichtet ist, eine bevorzugte Ausführungsform eines erfindungsgemäßen Verfahrens durchzuführen und die membrantechnische Vorrichtung 200 zu überwachen. Bei der Recheneinheit 210 kann es sich beispielsweise um eine Steuereinheit der membrantechnischen Vorrichtung 200 handeln oder auch um eine entferne Recheneinheit, beispielsweise um einen Server oder ein entferntes Recheneinheitensystem, beispielsweise in einem Rechenzentrum oder im Sinne des Cloud-Computing.

Während des Betriebs der membrantechnischen Vorrichtung 200 werden mit Hilfe von Sensoren Messungen 201 durchgeführt und es werden Messwerte erfasst, beispielsweise Druck, Temperatur, Zusammensetzungen, Volumenströme und Stoffkonzentrationen in Feed, Retentat und Permeat. Diese erfassten Messwerte werden an die Recheneinheit 210 übermittelt, angedeutet durch Bezugszeichen 202.

In der Recheneinheit 210 wird eine Auswertung 211 dieser erfassten Messwerte durchgeführt, im Zuge derer ein aktueller Zustand der membrantechnischen Vorrichtung bestimmt wird. Dieser aktuelle Zustand beschreibt beispielsweise, wie die membrantechnische Vorrichtung 200 betrieben wird und insbesondere wie sich die erfassten Messwerte im Vergleich zu vorgegebenen Soll-Werten verhalten.

Die erfassten Messwerte können als Rohdaten zunächst im Zuge dieser Auswertung 211 durch einen Datenabgleich (engl. "data reconciliation") aufbereitet bzw. geprüft und gegebenenfalls angepasst werden. Dies kann besonders zweckmäßig sein, da erfasste Messdaten mit Fehlern behaftet sein können und z.B. um einen Erwartungswert schwanken können oder bei einem Fehler eines entsprechenden Sensors komplett abweichend sein können. Darüber hinaus ermöglicht es ein derartiger Datenabgleich, Informationen redundanter Sensoren optimal zu nutzen.

Wenn beispielsweise Drücke an nahezu gleichen Positionen gemessen werden, kann im Zuge des Datenabgleichs bestimmt werden, welche Werte der gemessenen Drücke verwendet werden. Wenn beispielsweise ein Massenstrom im Feed, Retentat und Permeat gemessen wird, aber eine theoretische Massenbilanz nicht aufgeht, kann im Zuge des Datenabgleichs bestimmt werden, welche Werte korrekt sind.

Im Zuge des Datenabgleichs werden insbesondere Erhaltungsgleichungen wie z.B. Massenbilanzen genutzt, um aus Messinformationen den wahrscheinlichsten Zustand als aktuellen Zustand (Feldstatus, "field state") einer Messgröße zu ermitteln. Dafür kann z.B. ein mathematisches Optimierungsproblem aufgestellt und gelöst werden. Insbesondere werden die durch den Datenabgleich bestimmten aktuellen Zustände als Eingangsgröße für die weitere Verarbeitung genutzt, da diese im Vergleich zu den Rohdaten insbesondere nicht mehr so stark mit Messfehlern und Inkonsistenzen behaftet sind.

Dieser bestimmte aktuelle Zustand wird einem computerimplementierten Modell 212 als Eingangsgröße zugeführt.

Dieses Modell 212 bestimmt in Abhängigkeit von dem aktuellen Zustand einen modellbestimmten Zustand der membrantechnischen Vorrichtung 200. Das computerimplementierte Modell 212 bildet die membrantechnische Vorrichtung 200 und deren einzelne Komponenten theoretisch ab und stellt einen sog. digitalen Zwilling der membrantechnischen Vorrichtung 200 dar. Beispielsweise kann es sich um ein thermo- und hydrodynamisches Modell der Vorrichtung 200 handeln. Insbesondere können mittels des Modells auch Zustände von Komponenten der membrantechnischen Vorrichtung 200 bestimmt werden, welche messtechnisch nicht erschlossen sind. Auf diese Weise können die Messwerte bzw. die daraus ermittelten globalen Zustände mit lokalen Zuständen "angereichert" werden.

Der aus den Messwerten bestimmte aktuelle Zustand beschreibt insbesondere die gesamte Vorrichtung 200 im Allgemeinen ("globaler Zustand"). Der modellbestimmte Zustand umfasst hingegen insbesondere auch konkrete lokale Zustände einzelner Komponenten im Speziellen, insbesondere aller Komponenten der Vorrichtung 200.

Der aktuelle Zustand und der modellbestimmte Zustand werden ferner einer Datenanalyse 213 unterzogen. In Abhängigkeit von dem modellbestimmten Zustand und von dem aktuellen Zustand wird im Zuge dieser Datenanalyse 213 eine Überwachung wenigstens einer Komponente der membrantechnischen Vorrichtung 200 durchgeführt. Zu diesem Zweck wird ein Vergleich des aktuellen und des modellbestimmten Zustands durchgeführt.

Wenn der aktuelle und der modellbestimmte Zustand dabei nicht um mehr als einen vorgegebenen Schwellwert voneinander abweichen, wird insbesondere bestimmt, dass die dem Modell zugrundeliegenden Annahmen insbesondere hinsichtlich einer Beschaffenheit der einzelnen Komponenten der Vorrichtung 200 richtig sind, dass also beispielsweise die einzelnen Komponenten fehlerfrei und ohne Verschleißerscheinungen funktionieren.

Wenn der aktuelle und der modellbestimmte Zustand hingegen um mehr als den vorgegebenen Schwellwert voneinander abweichen, bedeutet dies, dass die dem Modell zugrundeliegenden Annahmen insbesondere hinsichtlich einer Beschaffenheit der einzelnen Komponenten der Vorrichtung 200 nicht richtig sind, dass also beispielsweise Verschleiß einer oder mehrerer Komponenten vorliegt. In diesem Fall wird eine zusätzliche Evaluation dahingehend durchgeführt, ob tatsächlich Verschleiß vorliegt und, wenn ja, welche Komponente welche Art von Verschleiß aufweist.

Beispielsweise werden im Zuge dieser zusätzlichen Evaluation mittels des computerimplementierten Modells 212 verschiedene Szenarien simuliert, in welchen jeweils verschiedene Komponenten der membrantechnischen Vorrichtung 200 unterschiedliche Arten von Verschleiß aufweisen. Mit Hilfe des computerimplementierten Modells 212 werden somit systematisch verschiedene Testszenarien nachgebildet, wobei unterschiedliche Verschleißerscheinungen einzelner Komponenten simuliert werden.

Die Ergebnisse dieser verschiedenen Szenarien werden ebenfalls der Datenanalyse 213 unterzogen, angedeutet durch Bezugszeichen 214. Dabei wird untersucht, wie sich die unterschiedlichen Verschleißerscheinungen verschiedener Komponenten jeweils auf die Messwerte und den Zustand der Vorrichtung 200 auswirken würden. Insbesondere wird somit gezielt danach gesucht, welcher Verschleiß in der Vorrichtung tatsächlich vorliegt.

Alternativ oder zusätzlich zu den von dem Modell 212 durchgeführten Szenarien kann im Zuge der Datenanalyse 213 bestimmt werden, dass es als zusätzliche Evaluation weiterer Messungen bedarf, um eindeutig festzustellen, welche Komponenten welche Art von Verschleiß aufweisen.

Beispielsweise kann zu diesem Zweck ein Test- bzw. Messprotokoll 215 erstellt werden, nach welchem in der Vorrichtung 200 entsprechende zusätzliche Messungen 205 durchgeführt werden, um die Vorrichtung 200 gezielt auf Verschleiß einzelner Komponenten hin zu untersuchen.

Ferner kann in Abhängigkeit von der Überwachung bzw. von dem Ergebnis der Datenanalyse 213 eine Optimierung 216 des Betriebs der membrantechnischen Vorrichtung 200 durchgeführt werden. Dabei können beispielsweise Prozess- bzw. Betriebsparameter bestimmt werden, gemäß welchen die Vorrichtung 200 effizienter und ökonomischer betrieben werden kann. Die Steuerung bzw. Regelung 206 der Vorrichtung 200 kann gemäß diesen bestimmten Prozess- bzw. Betriebsparameter durchgeführt werden.

Beispielsweise können im Zuge des Datenabgleichs bzw. der Auswertung 211 aktuelle Zustände im Feed bestimmt werden. In Abhängigkeit von diesen aktuellen Zuständen im Feed sowie ferner in Abhängigkeit einer Druckmessung im Permeat kann mittels des computerimplementierten Modells 212, z.B. in Form eines prädiktiven Simulationsmodells, beispielsweise ein zu erwartender Zustand der Anlage als modellbestimmter Zustand bestimmt werden. Als derartiger zu erwartender Zustand können insbesondere zu erwartende Mengen, Zusammensetzungen und Temperaturen des Retentats und des Permeats bestimmt werden. Weichen diese simulierten bzw. zu erwartenden Zustände von den gemesseneren Zuständen um mehr als den vorgegebenen Schwellwert ab, kann dies bereits auf einen abnormalen Zustand der gesamten Anlage hin deuten.

Zum anderen werden von dem computerimplementierten Modell 212 als Simulationsergebnisse lokale Zustände innerhalb der Gesamtanlage bestimmt, z.B. eine zu erwartende lokale Temperatur und ein zu erwartender Taupunkt an einer bestimmten Stelle in einer bestimmten Membrankartusche. Diese lokalen Zustände werden ebenfalls in der Datenanalyse 213 zur Beurteilung des Zustands der Anlage genutzt. Sollte z.B. eine prädiktierte lokale Temperatur den prädiktierten lokalen Taupunkt erreichen, wird dies im Zuge der Datenanalyse 213 als abnormaler Zustand identifiziert, der bereits ein Problem für die Gesamtanlage verursachen kann oder zeitnah dazu führen könnte.

Ein Rückschluss von den Messwerten der Gesamtanlage auf den Zustand einzelner Membrankartuschen wird im Zuge der Datenanalyse 213 insbesondere über eine Analyse der Abweichungen zwischen Messwerten und simuliertem Anlagenzustand möglich. Liegt z.B. der gemessene Permeatfluss über dem von dem computerimplementieren Modell bzw. dem digitalen Zwilling prädiktierten Permeatfluss, kann dies mehrere Ursachen haben. Gemäß einem ersten Fall könnte die Ursache ein mechanisches Versagen vieler Membranfasern in einer einzelnen Kartusche sein. Gemäß einem zweiten Fall könnte die Ursache hingegen ein mechanisches Versagen weniger Membranfasern in vielen Kartuschen sein. Gemäß einem dritten Fall könnte die Ursache wiederum eine Veränderung der Eigenschaften des Membranmaterials in allen Kartuschen sein, z.B. durch Plastifizierung.

Dieser dritte Fall kann von dem ersten und zweiten Fall beispielsweise unterschieden werden, indem die Sensitivitäten des Permeatflusses bezüglich des Drucks des Feed in der Simulation 212 und den Messwerten 201 verglichen werden. Ist die gemessene Sensitivität deutlich ausgeprägter als in der Simulation 212 mit mechanisch intakten Fasern, ist es wahrscheinlich, dass gerissene Fasern vorhanden sind.

Um nun weiter zwischen dem ersten und dem zweiten Fall unterscheiden zu können, wird der digitale Zwilling bzw. das computerimplementierte Modell 212 für Fallbetrachtungen verwendet. Hierbei wird beispielsweise im Zuge systematischer Tests 214 bewertet, wie sich das Hinzufügen von Leckagen (Faserrissen) in einzelnen oder allen Kartuschen auf das Verhalten der Gesamtanlage auswirkt. Durch einen Abgleich mit dem gemessen Anlagenverhalten wird dann der wahrscheinlichste Fall bestimmt.

Besonders vorteilhaft können Handlungsempfehlungen wie Test- bzw. Messprotokolle 215 an einen Betreiber oder Bedienpersonal der Vorrichtung ausgegeben werden, um vorliegende Fälle bzw. Fehlerszenarien besser eingrenzen zu können und zur Fehlerbehebung beitragen zu können.

Wäre in dem obigen Beispiel etwa der erste Fall am wahrscheinlichsten, könnte vorschlagen werden, kurzzeitig die Eingangstemperatur des Systems zu erhöhen. Wäre die vorherige Eingrenzung auf den ersten Fall zutreffend, würde dies in dem computerimplementierten Modell 212 in einer nur geringen Erhöhung des Permeatflusses resultieren. Wäre dieses Ergebnis ebenfalls in den Messdaten 201 sichtbar, wäre der identifizierte Fall noch wahrscheinlicher.

## Patentansprüche

1. Verfahren zum Überwachen einer membrantechnischen Vorrichtung (10, 100a, 100b, 200),
wobei während des Betriebs der membrantechnischen Vorrichtung (10, 100a, 100b, 200) Messwerte erfasst werden (201),
wobei in Abhängigkeit von den erfassten Messwerten ein aktueller Zustand der membrantechnischen Vorrichtung (10, 100a, 100b, 200) bestimmt wird (211),
wobei in Abhängigkeit von den erfassten Messwerten mittels eines computerimplementierten Modells (212) der membrantechnischen Vorrichtung ein modellbestimmter Zustand der membrantechnischen Vorrichtung (10, 100a, 100b, 200) bestimmt wird,
wobei in Abhängigkeit von dem modellbestimmten Zustand und von dem aktuellen Zustand eine Überwachung wenigstens einer Komponente der membrantechnischen Vorrichtung (10, 100a, 100b, 200) durchgeführt wird (213).

2. Verfahren nach Anspruch 1, wobei der modellbestimmte Zustand wenigstens einen lokalen Zustand einer Komponente umfasst (212).

3. Verfahren nach Anspruch 1 oder 2, wobei in Abhängigkeit von dem modellbestimmten Zustand und von dem aktuellen Zustand überwacht wird, ob ein Verschleiß der wenigstens einen Komponente vorliegt (213).

4. Verfahren nach einem der vorstehenden Ansprüche, wobei die Überwachung der wenigstens einen Komponente der membrantechnischen Vorrichtung in Abhängigkeit von einem Vergleich des modellbestimmten Zustands mit dem aktuellen Zustand durchgeführt wird (213).

5. Verfahren nach Anspruch 4, wobei, wenn der modellbestimmte Zustand und der aktuelle Zustand um mehr als einen vorbestimmten Schwellwert voneinander abweichen, eine zusätzliche Evaluation durchgeführt wird (214, 215).

6. Verfahren nach Anspruch 5, wobei im Zuge der zusätzlichen Evaluation mittels des computerimplementierten Modells (212) verschiedene Szenarien simuliert werden, in welchen jeweils verschiedene Komponenten der membrantechnischen Vorrichtung (10, 100a, 100b, 200) jeweils Verschleiß aufweisen (214).

7. Verfahren nach Anspruch 4 oder 5, wobei im Zuge der zusätzlichen Evaluation zusätzliche Messwerte während des Betriebs der membrantechnischen Vorrichtung (10, 100a, 100b, 200) bestimmt werden (215, 205).

8. Verfahren nach einem der vorstehenden Ansprüche, wobei in Abhängigkeit von der Überwachung (213) der wenigstens einen Komponente eine Optimierung des Betriebs der membrantechnischen Vorrichtung durchgeführt wird (216).

9. Verfahren nach einem der vorstehenden Ansprüche, wobei in Abhängigkeit von der Überwachung der wenigstens einen Komponente bewertet wird, ob ein Austausch und/oder eine Modifikation der wenigstens einen Komponente durchgeführt werden soll.

10. Verfahren nach einem der vorstehenden Ansprüche, wobei in Abhängigkeit von der Überwachung der wenigstens einen Komponente eine verbleibende Lebensdauer und/oder eines Lebensdauerverbrauchs der wenigstens einen Komponente bestimmt wird.

11. Recheneinheit (210), die dazu eingerichtet ist, alle Verfahrensschritte eines Verfahrens nach einem der vorstehenden Ansprüche durchzuführen.

12. Computerprogramm, das eine Recheneinheit (210) dazu veranlasst, alle Verfahrensschritte eines Verfahrens nach einem der Ansprüche 1 bis 10 durchzuführen, wenn es auf der Recheneinheit (210) ausgeführt wird.

13. Maschinenlesbares Speichermedium mit einem darauf gespeicherten Computerprogramm nach Anspruch 12.
